# EUROPÄISCHE PATENTSCHRIFT

(11) **EP 1 839 920 B1**
(45) Veröffentlichungstag und Bekanntmachung des Hinweises auf die Patenterteilung: **13.02.2013**
(21) Anmeldenummer: 06290540.1
(22) Anmeldetag: 31.03.2006
(51) Int. Cl.: B60H 1/22, B60H 1/00, F24H 9/18, F24H 3/04

(54) **Elektrischer Heizer für eine Heizungs- oder Klimaanlage eines Kraftfahrzeugs**
Electrical Heater for a vehicle air conditioning system
Chauffage électrique pour un système de climatisation d'un véhicule

(43) Veröffentlichungstag der Anmeldung: 03.10.2007
(73) Patentinhaber: Behr GmbH & Co. KG, 70469 Stuttgart (DE); Behr France Rouffach SAS, 68250 Rouffach (FR)
(72) Erfinder: Kohl, Michael, 74321 Bletigheim (DE); Otto, Jürgen, 75428 Illingen (DE); Gogmos, Erwan, 68000 Colmar (FR); Gross, Dieter, 70176 Stuttgart (DE)
(74) Vertreter: Grauel, Andreas

(56) Entgegenhaltungen:
- EP-A- 0 616 486
- EP-A- 1 574 791
- US-A- 4 963 716
- US-A1- 2004 252 986

## Beschreibung

Die Erfindung betrifft einen elektrischen Heizer oder Zuheizer, insbesondere für eine Heizungs- oder Klimaanlage eines Kraftfahrzeugs.

Bei Niederverbrauchsfahrzeugen ist auf Grund des geringen Abwärmeangebots eine zusätzliche Heizleistung zur Erwärmung des Fahrgastraums sowie zur schnellen Beseitigung eines Beschlags (Eis oder Wasser) insbesondere an der Windschutzscheibe erforderlich. Hierfür ist bekannt, bei Wärmetauschern, die aus Flachrohren aufgebaut sind, durch welche ein Wärmeübertragungsmedium strömt, welches im Heizungsfall Wärme abgibt, zumindest an den äußersten Rohren eine Zusatzheizung in Form von PTC-Heizelementen vorzusehen, wobei es sich in der Regel um Keramik-PTC-Bausteine handelt, bei denen sich üblicherweise eine Oberflächentemperatur von zwischen 110 und 160°C einstellt, unabhängig von den Randbedingungen, wie angelegte Spannung, Nominalwiderstand, Luftströmung. Auf Grund von Beschränkungen in der Formgebung und Geometrie ist die Anbringung oder die Konstruktion eines elektrischer Zuheizers recht aufwendig. Zudem sind die Keramik-PTC-Bausteine relativ schwer.

Herkömmliche PTC-Heizkörpern aus Keramik, die einen sehr eingeschränkten Freiheitsgrad bei der Auswahl einer Gestaltungsform bieten, verwenden die auf Grund dieser Gestaltungsprobleme ein Rippenelement zur Verbesserung der Wärmestrahleigenschaften. Ein derartiger Heizkörper ist beispielsweise aus der JP-B2-3274234 bekannt. Hierbei ist eine Wellrippe mit der Heizvorrichtung des PTC-Heizkörpers durch eine Metallplatte kombiniert, und ein Wärmeaustausch zwischen dem PTC-Heizkörper und Luft wird durch diese Wellrippe durchgeführt. Die erzeugte Wärme des PTC-Heizkörpers wird durch die Metallplatte thermisch zu der Wellrippe geleitet und von der Wellrippe an die Luft abgestrahlt. Nachteilig hierbei ist, dass die Temperatur der Wellrippe, die in Kontakt mit der Luftströmung ist, deutlich geringer als die Temperatur des PTC-Heizkörpers ist.

Aus diesem Grund wird der direkte Wärmeübergang vom PTC-Heizkörper auf den Luftstrom bevorzugt. So ist aus der DE 10 2004 027 687 A1 als nächstliegendes Stand der Technik eine elektrische Heizvorrichtung mit mehreren Heizkörperplatten, die parallel zueinander angeordnet sind, um einen Luftkanal zwischen zwei benachbarten Heizkörperplatten zu definieren, ein mit einer Stirnseite jeder Heizkörperplatte verbundenes positives Elektrodenelement und ein mit der anderen Stirnseite jeder Heizkörperplatte verbundenes negatives Elektrodenelement bekannt. Bei den Heizkörperplatten handelt es sich beispielsweise um ein elektrisch leitfähiges Harz, in welches ein elektrisch leitfähiges Füllmaterial gemischt ist. Dabei besitzt das elektrisch leitfähige Harz im Allgemeinen eine positive Widerstands-Temperatur-Kennlinie, bei welcher der elektrische Widerstand bei einer vorbestimmten Temperatur oder höher steigt. Der Strom fließt hierbei von einem Elektrodenelement durch die Heizkörperplatten zum anderen Elektrodenelement. Somit entfallen die Wellrippen bei diesem direkten Wärmeübergang.

Ferner sind Ausgestaltungen mit Kunststoff-PTC-Elementen bekannt, die mittels hieran bspw. mittels Kleben angebrachter, der elektrischen Kontaktierung dienender Kontaktbleche verbunden sind, wobei die Kunststoff-PTC-Elemente selbst direkt das Heizgitter bilden. Beispielsweise die DE 10 2004 045 668 A1 zeigt derartige elektrisch beheizbare Kunststoffmatrixen, die beispielsweise eine Wabenstruktur oder eine luftdurchströmbare Schaumstruktur aufweisen können. Für eine verbesserte Ein- und Ableitung des Stromes können Kontaktmittel vorgesehen sein, beispielsweise in Form von Kämmen mit Zinken, die in Kanäle der Wabenstruktur eingeführt sind, mittels auf die Kontaktflächen geklebter Metallfolien oder mittels aufgebrachter Metallschichten. Die Aufbringung der Metallschichten kann beispielsweise mittels Sputtern, des PVC-Verfahrens, Lichtbogenverdampfung oder Galvanisieren erfolgen.

Die US 5,206,476 offenbart eine PTC-Heizereinheit, die im Bereich der Ausströmer angeordnet ist, wobei die PTC-Heizereinheit durch ein Polymermaterial mit PTC-Eigenschaften gebildet ist, welches mehrere rechteckförmig ausgebildete und in einer Reihe angeordnete Luftkanäle aufweist, die von Luft durchströmt werden. Auf der Ober- und Unterseite des PTC-Elements sind Kontaktbleche für die elektrische Kontaktierung vorgesehen, so dass der Stromfluss von dem oberen Kontaktblech über die Oberseite des PTC-Elements durch die einzelnen Stege zur Unterseite des PTC-Elements und anschließend zum unteren Kontaktblech oder anders herum erfolgt. Eine derartige Heizereinheit lässt noch Wünsche offen.

Weiterhin sind noch die Druckschriften EP 1574791 A1, EP 0616486 A1, US 4963716 und US 2004/252986 A1 als der DE 10 2004 027 687 entsprechende US Anmeldung bekannt geworden.

Die US 2004/252986A1 offenbart einen elektrischen Heizer oder Zuheizer, für eine Heizungs- oder Klimaanlage eines Kraftfahrzeugs, mit mindestens einem Heizelement, das aus mehreren PTC-Elementen gebildet ist, welche der Erwärmung eines strömenden Mediums dienen wobei der elektrische Heizer oder Zuheizer mindestens eine im Medienstrom angeordnete, die wärmeableitende Oberfläche vergrößernde Struktur aufweist, und die die wärmeableitende Oberfläche vergrößernde Struktur mit einem Teil ihrer Oberfläche direkt anliegend an das Heizelement zumindest in einem Bereich angeordnet ist, in welchem die Stromein- oder -ableitung in das bzw. aus dem PTC-Element erfolgt.

Ausgehend von diesem Stand der Technik ist es Aufgabe der Erfindung, einen verbesserten elektrischen Heizer oder Zuheizer zur Verfügung zu stellen. Diese Aufgabe wird gelöst durch einen elektrischen Heizer oder Zuheizer, insbesondere für eine Heizungs- oder Klimaanlage eines Kraftfahrzeugs, mit den Merkmalen des Anspruchs 1. Vorteilhafte Ausgestaltungen sind Gegenstand der Unteransprüche.

Durch das Vorsehen von einer die wärmeableitende Oberfläche vergrößernden Struktur, welche vorzugsweise durch metallische, gut wärmeleitende Wellrippen gebildet ist und von einem Medium durchströmbar ist, welche die vom PTC-Element erzeugte Wärme zügig abführt, kann die Leistungsdichte des Heizelements erhöht werden. Hierbei wird die im Bereich des Stromein - und -austritts, welcher häufig nicht großflächig sondern an Engstellen erfolgt, erzeugte Wärme zügig nach außen abgeführt, so dass das PTC-Element in diesem Bereichen nicht in Folge seiner Erwärmung abregelt und dadurch die folgenden Bereiche nicht ausreichend mit Strom versorgt werden. Eine ausreichende Wärmeableitung ist insbesondere in Bereichen hilfreich, denen Engstellen des PTC-Elements direkt nachfolgen, wie beispielsweise in L- oder T-förmigen Bereichen des PTC-Elements. Ebenso ist die Wärmeableitung in Bereichen einer punktförmigen oder kleinflächigen Stromein- oder -ableitung vorteilhaft, um durch die Wärmeerzeugung in Folge des relativ großen Stromes, der in dem entsprechenden, relativ kleinen Bereich des PTC-Elements fließt, keine Blockade des Stromflusses durch die automatische Abregelung des PTC-Elements zu bewirken

Die Wellrippen können insbesondere bevorzugt eine Wellenform, eine V-Form (Zick-Zack-Form), eine Rechteckform (Mäanderform) und/oder eine Trapezform (Mäanderform) aufweisen. Im Prinzip ist die Gestalt der Struktur nicht beschränkt, solange sie eine ausreichende Fläche für die Wärmeübertragung an das durchströmende Medium sowie gegebenenfalls für die elektrische Kontaktierung zur Verfügung stellen kann. Die Struktur kann eine glatte Oberfläche aufweisen, jedoch ist auch eine zusätzliche Struktur der Oberfläche möglich. Ebenso können Kiemen, Perforierungen, Schlitze o.ä. vorgesehen sein, um die Wärmeabgabe zu optimieren. Die Struktur kann auch durch Lamellen gebildet sein. Die die wärmeableitende Oberfläche vergrößernde Struktur ist vorzugsweise durch ein oder mehrere Metallbleche, insbesondere aus Aluminium, Kupfer oder Silber, gebildet. Im Prinzip ist aber jedes ausreichend gut wärmeleitende Material mit ausreichenden mechanischen Eigenschaften geeignet.

Die PTC-Elemente werden bevorzugt durch Kunststoff-Elemente mit PTC-Eigenschaften gebildet, welche einfacher und flexibler herstellbar sind als bekannte Keramik-PTC-Elemente. Das PTC-Element, insbesondere im Falle eines Kunststoff-PTC-Elements, kann gespritzt, extrudiert, gesintert oder auf sonstige geeignete Weise hergestellt sein. Das Heizelement besteht bevorzugt aus einem Polymer, insbesondere bevorzugt einem Polyolefin, mit elektrisch leitenden Füllmaterialien, insbesondere mit Kohlenstoff, insbesondere in Form von Rußpartikeln. Andere geeignete Materialien können jedoch auch verwendet werden.

Beim Medium handelt es sich in der Regel um Luft, jedoch kann es sich beim Medium auch um ein beliebiges anderes Medium handeln, insbesondere auch eine Flüssigkeit, wie insbesondere Öl, wobei gegebenenfalls entsprechenden Eigenschaften und geeigneten Maßnahmen zur Vermeidung eines Stromflusses durch das Medium vorzusehen sind.

Das PTC-Element weist eine von einem Medium, insbesondere vom selben Medium wie die die wärmeableitende Oberfläche vergrößernde Struktur durchströmbare Öffnung, insbesondere in Form eines durchgehenden Hohlprofils auf, wobei das Hohlprofil auch aus mehreren zusammengesetzten Teilen gebildet sein kann. Als Hohlprofil kommen insbesondere flachrohrartige Profile, insbesondere mit einer Mehrzahl nebeneinander angeordneter, durchgehender und vom zu erwärmenden Medium durchströmbarer Öffnungen, insbesondere in Rechteckform, in Frage, jedoch sind die Formen nicht beschränkt.

Erfindungsgemäß ist eine Mehrzahl von vom Medium durchströmbare Öffnungen im Heizelement ausgebildet. Hierbei handelt es sich vorzugsweise um nebeneinander angeordneter, rechteckförmiger Öffnungen.

Bevorzugt dient die wärmeableitende Oberfläche vergrößernde Struktur zusätzlich der elektrischen Kontaktierung des PTC-Elements. Hierdurch können Kontaktbleche, welche normalerweise den elektrischen Kontakt bilden entfallen oder auf der dem PTC-Element gegenüberliegenden Seite angeordnet sein.

Vorzugsweise ist das Kunststoff-PTC-Element bereichsweise mit mindestens einer elektrisch leitenden Oberflächenbeschichtung, im Folgenden als Beschichtung bezeichnet, versehen. Das Vorsehen einer elektrisch leitenden Beschichtung verringert den Oberflächenwiderstand und somit den Übergangswiderstand, wobei auch eine direkte elektrische Anbindung von elektrisch leitenden Partikels im PTC-Element erfolgt, und vereinfacht somit die Stromzuführung und/oder -ableitung, so dass eine großflächige Kontaktierung entfallen kann, wodurch sich die Herstellungskosten und auch das Gewicht des Zuheizers verringern. Bevorzugt sind die PTC-Elemente mit zwei räumlich durch das PTC-Element voneinander getrennten elektrisch leitenden Beschichtungen versehen. Hierbei sind die Beschichtungen so angeordnet, dass das PTC-Element möglichst großflächig durchströmt und dadurch entsprechend erwärmt wird. Um eine ungleichmäßige Erwärmung zu verhindern, ist die Dicke und somit der Abstand der beiden Beschichtungen des PTC-Elements entsprechend möglichst gleichbleibend ausgebildet. Der Stromfluss erfolgt vorzugsweise entlang des kürzesten Weges durch das PTC-Element. Neben einer Verbesserung des Stromübergangs hat eine entsprechende Beschichtung auch eine Verbesserung des Wärmeübergangs, beispielsweise über ein Kontaktblech oder ein anderes Element, wie insbesondere eine die wärmeableitende Oberfläche vergrößernde Struktur zur Folge. Ferner erhöht die Beschichtung die Langzeitstabilität des Heizelements, da sie als eine Art Versiegelung wirkt. Auch die Anbringung weiterer Elemente am PTC-Element wird vereinfacht, da sich mehr Klebstoffe eignen (Klebeverbindung Metall-Metall).

Die Beschichtung wird vorzugsweise durch Silber, Aluminium, Kupfer oder Gold sowie entsprechende Legierungen gebildet, andere gut stromleitende Materialien sind ebenfalls möglich. Die Beschichtung kann auch mehrschichtig ausgebildet sein, bspw. durch eine auf Kunststoff aufgebrachte Kupferschicht.

Die Beschichtung kann vorzugsweise mittels Bedampfen (z.B. PVC-Verfahren, CVD-Verfahren), Plattierens, galvanischen Abscheidens und/oder themischen Spritzens erfolgen. Andere Verfahren sind ebenfalls möglich. Ebenso kann eine elektrisch leitende Folie aufgeklebt werden, wobei die Folie auch selbstklebend ausgeführt sein kann.

Um die Stromeinleitung zu Optimieren, ist - insbesondere im Falle des Vorsehens einer Stromein- und -ableitung über die die wärmeableitende Oberfläche vergrößernde Struktur - bevorzugt besagte Oberflächenbeschichtung vorgesehen, auf Grund der guten Wärmeableitung und der damit verbundenen, verbesserten, insbesondere vergrößerten, Stromeinleit- bzw. ableitzone kann sie prinzipiell jedoch auch entfallen oder auch dünner ausgebildet sein.

Die die wärmeableitende Oberfläche vergrößernden Struktur und das Kontaktblech und/oder das Heizelement können mittels mechanischen Fügens, beispielsweise mittels Verpressens, bspw. in einem Rahmen, oder einer vorspannenden Feder, die in den Rahmen mit den anderen Bauteilen eingelegt wird, miteinander verbunden sein. Ebenfalls ist ein Verkleben möglich. Hierbei kann der Klebstoff auf beliebige Weise aufgetragen und ausgehärtet werden. Der Klebstoff kann eine durchgehende Schicht bilden, jedoch sind bevorzugt Kontaktpunkte zur elektrischen Kontaktierung vorgesehen, an welchen die zu verbindenden Teile in direktem Kontakt miteinander stehen. Insbesondere in diesem Fall ist auch die Verwendung eines kostengünstigen, isolierend wirkenden Klebstoffes möglich.

Aus Gründen der Kurzschluss-Sicherheit im Kraftfahrzeug sind bevorzugt die außen angeordnete Kontaktbleche mit dem Minus-Pol und/oder die innere Kontaktbleche mit dem Plus-Pol verbunden ist.

Ein oder mehrere derartige elektrische Heizer oder Zuheizer werden vorzugsweise in einer Kraftfahrzeug-Heiz- oder -Klimaanlage verwendet. Dabei kann eine entsprechende Anordnung von PTC-Elementen sowohl im Bereich des Heizers, d.h. insbesondere im Gehäuse einer Klimaanlage, als Zuheizer als auch im Bereich der Luftkanäle kurz vor den Aussströmern verwendet werden, wo die PTC-Elemente bei Bedarf "vor Ort" zusätzliche Wärme erzeugen.

Im Folgenden wird die Erfindung anhand mehrerer Ausführungsbeispiele unter Bezugnahme auf die Zeichnung im Einzelnen erläutert. Es zeigen:

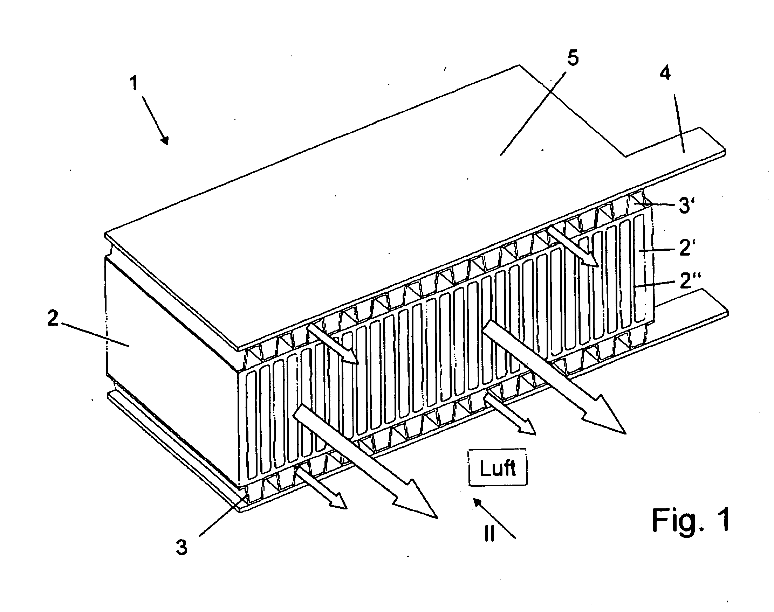

Fig. 1 eine ausschnittsweise perspektivische Darstellung eines elektrischen Zuheizers gemäß dem ersten Ausführungsbeispiel,

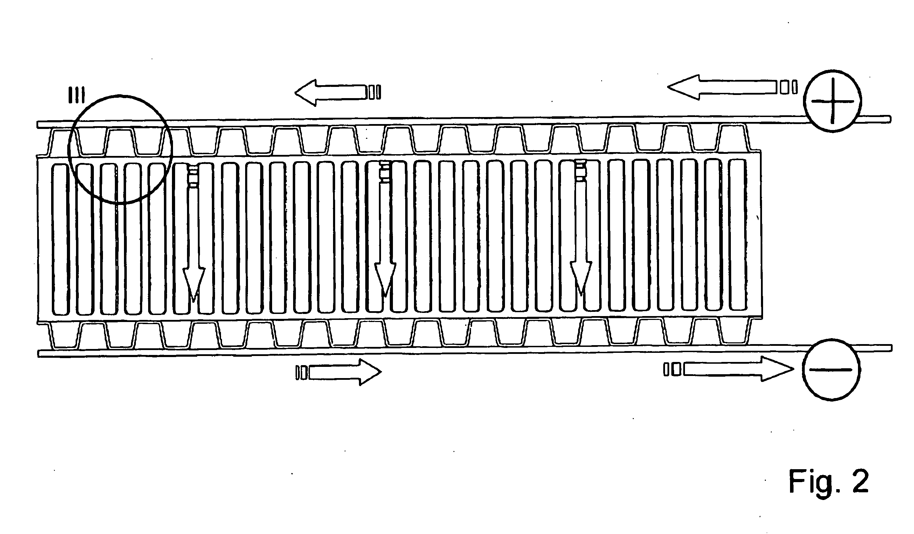

Fig. 2 eine Ansicht des elektrischen Zuheizers aus Richtung II in Fig. 1,
Fig. 3 eine Detaildarstellung des mit III bezeichneten Bereichs von Fig. 2,
Fig. 4 eine Fig. 3 entsprechende Detaildarstellung einer ersten Variante des elektrischen Zuheizers,
Fig. 5 eine zweite Variante des ersten Ausführungsbeispiels,
Fig. 6 eine Detaildarstellung des mit VI bezeichneten Bereichs von Fig. 5,
Fig. 7 eine Ansicht des elektrischen Zuheizers gemäß dem zweiten Ausführungsbeispiel,
Fig. 8 eine Detaildarstellung des mit VIII bezeichneten Bereichs von Fig. 7,
Fig. 9 eine Fig. 8 entsprechende Detaildarstellung einer Variante des zweiten Ausführungsbeispiels,
Fig. 10 eine schematische ausschnittsweise Darstellung eines mechanisch gespannten Heizers mit einem Heizelement,
Fig. 11 eine schematische ausschnittsweise Darstellung eines mechanisch gespannten Heizers mit zwei Heizelementen,
Fig. 12 eine schematische ausschnittsweise Darstellung eines geklebten Heizers mit einem Heizelement,
Fig. 13 eine Detaildarstellung des Bereichs XIII von Fig. 12,
Fig. 14 eine Fig. 13 entsprechende Detaildarstellung gemäß ersten Variante des ersten Ausführungsbeispiels (von Fig. 4) im Falle eines geklebten Heizers,
Fig. 15 eine schematische ausschnittsweise Darstellung eines geklebten Heizers mit getrennter Zuschaltung,
Fig. 16 eine schematische Darstellung einer Anordnung mehrerer Heizelemente, wobei eine getrennte Zuschaltung vorgesehen ist,
Fig. 17 eine Detaildarstellung zur Verdeutlichung der verwendeten Bezeichnungen einzelner Abmessungen,
Fig. 18 eine andere Detaildarstellung zur Verdeutlichung der verwendeten Bezeichnungen einzelner Abmessungen,
Fig. 19 eine stark schematisierte Darstellung einer zweiten mechanischen Möglichkeit der (Vor-)Fixierung der die wärmeableitende Oberfläche vergrößernden Strukturen am Heizelement,
Fig. 20 eine perspektivische, explosionsartige Darstellung einer dritten mechanischen Möglichkeit der (Vor-)Fixierung der die wärmeableitende Oberfläche vergrößernden Strukturen am Heizelement,
Fig. 21 die Darstellung von Fig. 20 im zusammengebauten Zustand,
Fig. 22 eine Seitenansicht von Fig. 21,
Fig. 23 eine Seitenansicht von Fig. 20,
Fig. 24 eine perspektivische, explosionsartige Darstellung einer vierten mechanischen Möglichkeit der (Vor-)Fixierung der die wärmeableitende Oberfläche vergrößernden Strukturen am Heizelement,
Fig. 25 eine Draufsicht auf die am Heizelement vorfixierte die wärmeableitende Oberfläche vergrößernde Struktur von Fig. 24,
Fig. 26 einen Schnitt entlang Linie B-B von Fig. 25,
Fig. 27 eine Detailansicht des Details XXV von Fig. 26,
Fig. 28 eine Detailansicht des Details XXVI von Fig. 27 ohne die die wärmeableitende Oberfläche vergrößernde Struktur,
Fig. 29 eine schematische Detaildarstellung zur Verdeutlichung der verwendeten Bezeichnungen einzelner Abmessungen im Falle eines nicht erfindungsgemäßen flachen, quaderförmigen PTC-Elements ohne Öffnungen,
Fig. 30 eine perspektivische Darstellung des in Fig. 29 dargestellten Ausschnitts zur Verdeutlichung der verwendeten Bezeichnungen einzelner Abmessungen,
Fig. 31 eine perspektivische Ansicht eine Kontaktblechs, wie es beim Zuheizer gemäß Figuren 33 bis 39 eingespritzt ist,
Fig. 32 eine andere perspektivische Ansicht des Kontaktblechs von Fig. 31,
Fig. 33 eine perspektivische Ansicht eines PTC-Zuheizers mit eingespritzten Kontaktblechen,
Fig. 34 eine Seitenansicht des Zuheizers von Fig. 33,
Fig. 35 eine Seitenansicht des oberen Kontaktblechs,
Fig. 36 eine Seitenansicht des unteren Kontaktblechs,
Fig. 37 eine Seiteansicht des Zuheizers,
Fig. 38 einen Schnitt entlang Linie A-A von Fig. 37,
Fig. 39 einen Schnitt entlang Linie D-D von Fig. 37,
Fig. 40 eine perspektivische Ansicht eine Kontaktblechs, wie es beim Zuheizer gemäß Fig. 42 eingespritzt ist,
Fig. 41 eine andere perspektivische Ansicht des Kontaktblechs von Fig. 40,
Fig. 42 eine perspektivische Ansicht eines PTC-Zuheizers mit eingespritzten Kontaktblechen,
Fig. 43 eine vergrößerte Schnittdarstellung durch den oberen Teilbereich des Zuheizers von Fig. 40,
Fig. 44 eine perspektivische Ansicht eines Kontaktblechs, wie es beim Zuheizer gemäß Fig. 45 eingespritzt ist,
Fig. 45 eine perspektivische Ansicht eines PTC-Zuheizers mit eingespritzten Kontaktblechen,
Fig. 46 eine perspektivische Darstellung eines Zuheizers mit über die Breite unterschiedlichen Bauhöhen,
Fig. 47 eine Seitenansicht des Zuheizers von Fig. 46,
Fig. 48 einen Schnitt entlang Linie B-B in Fig. 47,
Fig. 49 eine perspektivische Darstellung eines Zuheizers mit zwei Heizbereichen,
Fig. 50 eine Seitenansicht eines Heizbereichs, welcher einer Ausführungsform mit einem kleineren Heizbereich des Zuheizers von Fig. 49 entspricht,
Fig. 51 eine Seitenansicht entsprechend Fig. 50 einer Variante,
Fig. 52 eine perspektivische Ansicht eines Zuheizers mit einer Mehrzahl von Heizbereichen,
Fig. 53 Eine perspektivische Ansicht eines Zuheizers mit zwischen den PTC-Elementen angeordneten Metallblechen,
Fig. 54 eine Seitenansicht des Zuheizers von Fig. 53,
Fig. 55 einen Schnitt entlang Linie G-G von Fig. 54, und
Fig. 56 einen Schnitt entlang Linie H-H von Fig. 54.

Ein elektrischer Zuheizer 1 mit einer Bautiefe t₂ von 500 mm für eine Kraftfahrzeug-Klimaanlage (nicht dargestellt) weist gemäß dem ersten Ausführungsbeispiel ein blockartig ausgebildetes und mit einer Mehrzahl von durchgehenden, parallel zueinander angeordneten Schlitzen (im Folgenden auch als Öffnungen bezeichnet) versehenes Heizelement 2 auf. Die Schlitze werden im Folgenden auch als Öffnungen 2', das zwischen den Öffnungen 2' angeordnete Material als Stege 2" und das oberhalb und unterhalb der Stege 2" angeordnete Material als Ober- bzw. Unterseite des Heizelements 2 bezeichnet.

Das Heizelement 2 besteht aus einem Kunststoff mit PTC-Eigenschaften, vorliegend aus einem Polyolefin mit Rußpartikeln, weshalb im Folgenden auf das Heizelement 2 auch als PTC-Element Bezug genommen wird. Das PTC-Element ist vorliegend mittels Spritzen hergestellt, alternativ sind auch andere Herstellungsverfahren, wie sie insbesondere aus der Kunststoffherstellung bekannt sind, möglich, wie bspw. Extrudieren oder Sintern. Alternativ zu einem Kunststoff-PTC-Element kann auch ein anderes geeignetes Material mit PTC-Eigenschaften verwendet werden. Die Höhe h_{K2} des PTC-Elements beträgt vorliegend 50 mm.

Ferner weit der Zuheizer 1 zwei jeweils oberhalb und unterhalb des PTC-Elements angeordnete, die wärmeableitende Oberfläche vergrößernden Strukturen 3 auf, welche durch je eine Wellrippe mit trapezförmigen Wellen gebildet sind. Die die Wellrippe bestehen aus einem elektrisch leitenden und gut wärmeleitenden Metallblech, vorliegend aus einem Kupferblech. Die Wellrippen sind hierbei so angeordnet, dass die Berge und Täler der Wellrippe in gleicher Richtung wie die Öffnungen 2' des Heizelements 2 verlaufen, so dass auch die Wellrippen durchgehende Öffnungen 3' bilden, die durch Stege 3" voneinander getrennt sind. Das die Wellrippe bildende Blech hat vorliegend eine Materialstärke, also Dicke d_{R2}, von 0,2 mm. Die Wellrippenhöhe h_{R2} beträgt vorliegend 5 mm.

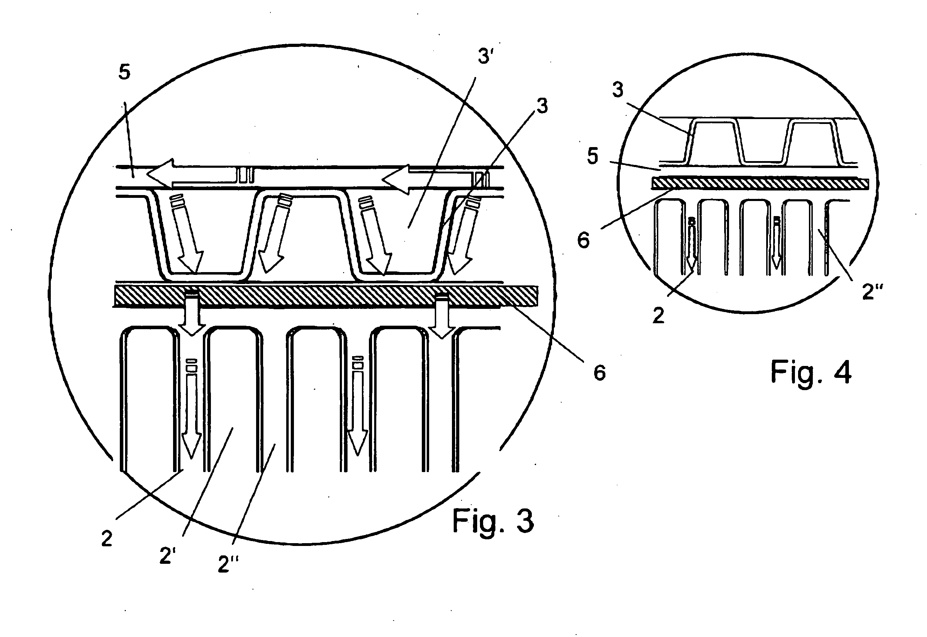

Auf der vom PTC-Element abgewandten Seite der Wellrippe sind je zwei auf einer Seite mit der elektrischen Kontaktierung dienenden Kontaktfahnen 4 versehene Kontaktbleche 5 angeordnet. Vorliegend bestehen auch die Kontaktbleche 5 aus Kupferblechen. Um eine großflächige elektrische Kontaktierung des PTC-Elements zu gewährleisten, auch wenn die Wellrippen nur bereichsweise das PTC-Element kontaktieren, ist jeweils auf der Oberfläche, welche in Kontakt mit der Wellrippe ist, eine elektrisch leitende Beschichtung 6 vorgesehen (siehe Fig. 3), welche auch gute wärmeleitende Eigenschaften aufweist. Diese sorgt für eine relative gleichmäßige Stromeinleitung von der Wellrippe in das PTC-Element. Vorliegend besteht die Beschichtung 6 aus einer im PVC-Verfahren aufgedampften Kupferschicht. Die Beschichtung 6 ist ausschließlich auf der Ober- und Unterseite des PTC-Elements vorgesehen, so dass kein Kurzschluss über die Beschichtung erfolgt.

Der Zuheizer 1 ist gemäß dem ersten Ausführungsbeispiel in dem die Kraftfahrzeug-Klimaanlage durchströmenden Luftstrom, angedeutet durch Pfeile, vorliegend nach dem Heizer angeordnet, jedoch kann der Zuheizer auch an anderer Stelle in einem Luftkanal angeordnet sein, bspw. kurz vor den Ausströmern, durch welche die Luft in den Fahrzeuginnenraum ausströmt. Hierbei wird die zu erwärmende Luft sowohl durch die Öffnungen 2' im Heizelement 2 als auch durch die durch die durch die Wellrippe gebildeten Öffnungen 3' geleitet.

Der Stromfluss erfolgt, wie in Fig. 3 durch Pfeile dargestellt, über das Kontaktblech 5 zur Wellrippe, zur Beschichtung 6 und anschließend zum PTC-Element, wo der Strom über die Oberseite in die einzelnen, zwischen den Öffnungen 2' ausgebildeten Stege 2" strömt, vorliegend von oben nach unten. Anschließend gelangt der Strom von den Stegen 2" über die Unterseite des PTC-Elements zur unteren Beschichtung 6, zur Wellrippe und anschließend zum unteren Kontaktblech 5.

Bei großen Stromdichten erwärmt sich das PTC-Element im entsprechenden Bereich und regelt in Folge der Erwärmung ab, so dass weniger Wärme im entsprechenden Bereich erzeugt wird. Zudem steigt der elektrische Widerstand im entsprechenden Bereich an, so dass der Strom sich einen anderen Weg sucht, sofern möglich. Besonders kritische Bereiche sind die Endbereiche der Stege 2". Da jedoch die im PTC-Element in diesem Bereich erzeugte Wärme über die relativ dünne Oberseite des PTC-Elements und die Beschichtung 6 zu der die wärmeableitende Oberfläche vergrößernde Struktur 3 abgeleitet wird, wo sie an die den Zuheizer 1 durch die Öffnungen 3' durchströmende Luft abgegeben wird. Somit wird während des Heizbetriebs beständig Wärme aus diesen besonders kritischen Bereichen, welche den eigentlichen Heizbereich des PTC-Elements, nämlich die Stege 2" versorgen, abgeleitet, so dass der elektrische Widerstand des PTC-Elements verringert und die Heizleistung in den Stegen 2" erhöht wird. Um eine möglichst große Heizleistung zu ermöglichen, ist die Dicke d v2, welche durch die Ober- bzw. Unterseite des PTC-Elements und der hierauf vorgesehenen Beschichtung 6 gebildet wird, möglichst gering.

Die Leistungsdichten der Fläche der einzelnen Stege 3" des PTC-Elements betragen vorliegend ca. 0,45 Watt/cm² bei einer Luftdurchströmung mit einer Luftmenge von mehr als 1 kg/min. und einer Lufteintrittstemperatur in den Zuheizer 1 von weniger als 40°C. Die Leistungsdichten bei entsprechenden Bedingungen bezogen auf das Volumen des gesamten PTC-Elements beträgt vorliegend ca. 4,0 Watt/cm³.

Gemäß einer in Fig. 4 ausschnittsweise dargestellten, ersten Variante des ersten Ausführungsbeispiels ist das Kontaktblech 5 nicht auf der dem PTC-Element gegenüberliegenden Seite der Struktur 3 sondern zwischen Struktur 3 und Beschichtung 6 des PTC-Elements angeordnet. Auch in diesem Fall leitet die die wärmeableitende Oberfläche vergrößernden Struktur 3 die am Eintritt in die Stege 3" des PTC-Elements erzeugte Wärme nach außen ab, so dass eine verbesserte Heizleistung bewirkt wird. Der weitere Aufbau unterscheidet sich nicht von dem des ersten Ausführungsbeispiels, so dass hierauf nicht näher eingegangen wird.

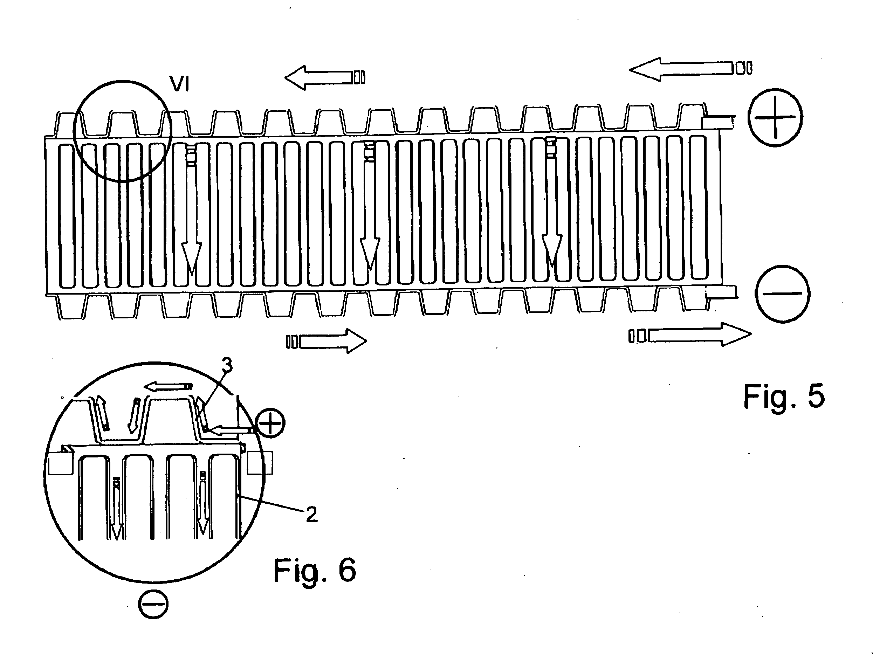

Gemäß einer in den Figuren 5 und 6 dargestellten, zweiten Variante des ersten Ausführungsbeispiels entfallen die Beschichtungen 6 der Ober- und Unterseite des Heizelements 2 und die Kontaktbleche 5. Die Funktion der Kontaktbleche wird direkt durch die die wärmeableitende Oberfläche vergrößernden Strukturen 3 übernommen, welche außenseitig mit entsprechenden Kontaktfahnen zur elektrischen Kontaktierung versehen sind. Der Stromfluss über die obere Struktur 3 ist in Fig. 6 durch Pfeile verdeutlicht.

Gemäß einer weiteren, nicht in der Zeichnung dargestellten Variante ist auf der Ober- und Unterseite des Heizelements jeweils eine elektrisch leitfähige Beschichtung vorgesehen, welche den Beschichtungen 6 des ersten Ausführungsbeispiels und dessen erster Variante entsprechen. Die Stromein- und - ableitung erfolgt - entsprechend der zweiten Variante des ersten Ausführungsbeispiels - über die die wärmeableitende Oberfläche vergrößernden Strukturen 3, so dass, verglichen mit der zuvor beschriebenen Variante des ersten Ausführungsbeispiels, die gesamte Oberseite gleichmäßiger mit Strom versorgt und von der gesamten Unterseite der Strom gleichmäßiger abgeleitet wird.

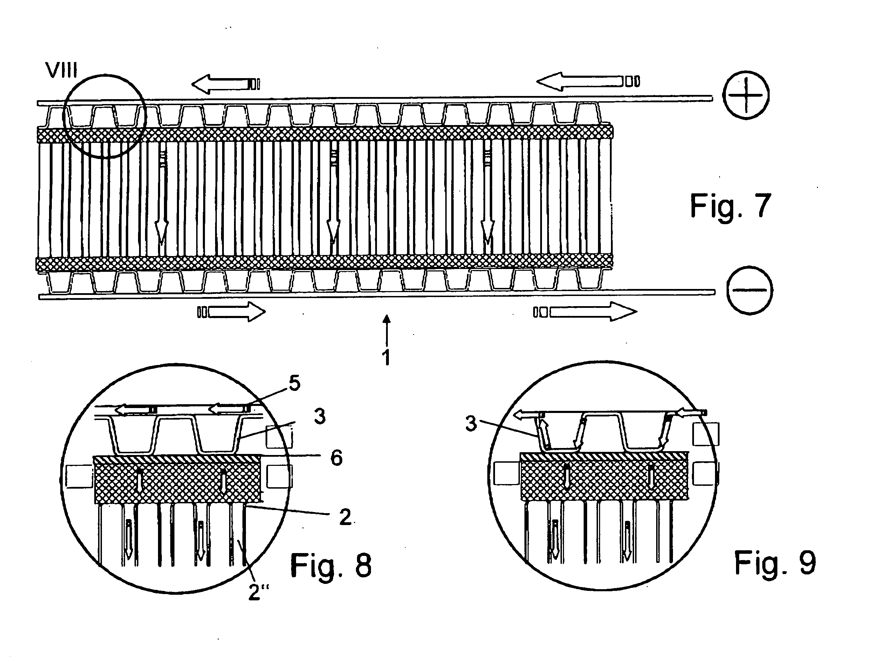

In den Figuren 7 und 8 ist ein elektrischer Zuheizer 1 dargestellt, welcher in seiner Verwendung demjenigen des ersten Ausführungsbeispiels entspricht. Im Unterschied zum ersten Ausführungsbeispiel ist das PTC-Heizelement 2 aus zwei unterschiedlichen Materialen gefertigt, wobei das erste Material für die Stege 2" und das zweite Material für die Ober- und Unterseite verwendet wird. Beim ersten Material handelt es sich um einen Kunststoff mit PTC-Effekt, welcher dem des ersten Ausführungsbeispiels entspricht. Beim zweiten Material handelt es sich um einen elektrisch leitfähigen Kunststoff mit geringem elektrischen Widerstand und ohne PTC-Effekt Der weitere Aufbau des Zuheizers 1 gemäß dem zweiten Ausführungsbeispiel entspricht exakt jenem des ersten Ausführungsbeispiels. Auf Grund der guten elektrischen Leitfähigkeit des für die Ober- und Unterseite des Heizelements 2 verwendeten Materials und des fehlenden PTC-Effekts wird der Strom gleiichmäßig über die Oberseite den Stegen 2" zugeführt und über die Unterseite von den Stegen 2" wieder abgeleitet. Die in den Anfangs- und Endbereichen der Stege 2" erzeugte Wärme wird zusätzlich über die Ober- bzw. Unterseite, die Beschichtung zu den Wellrippen abgeleitet, wo sie an die die Wellrippen durchströmende Luft abgegeben wird, so dass in den entsprechenden Bereichen der Stege 2", die am wenigsten von Luft umströmt werden, also am wenigsten gekühlt werden, sich keine den Stromfluss blockierende Wärme ansammelt, wodurch die Heizleistung des Zuheizers 1 verbessert wird.

Gemäß der ersten Variante des zweiten Ausführungsbeispiels entfällt das Kontaktblech 5, dessen Stromleitfunktion durch die die wärmeableitende Oberfläche vergrößernden Strukturen 3 übernimmt (siehe Fig. 9).

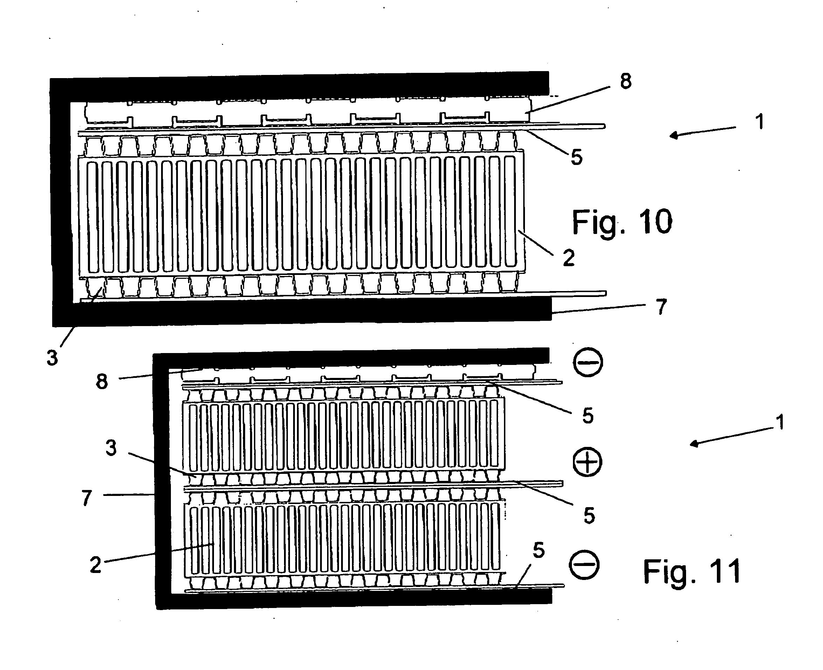

In Fig. 10 ist der Zuheizer 1 gemäß dem ersten Ausführungsbeispiel dargestellt, wobei das Heizelement 2 samt die wärmeableitende Oberfläche vergrößernden Strukturen 3 und Kontaktblechen 5 in einem Gehäuse 7 angeordnet sind. Vorliegend ist hierbei eine mechanische Spannung mit Hilfe einer Spannfeder 8 vorgesehen. Die Fixierung im Gehäuse 7 erfolgt somit rein mechanisch. Der gesamte Innenraum des Gehäuses 7 wird von Luft durchströmt, also sowohl die Öffnungen 2' des Heizelements 2 als auch die Öffnungen 3', die durch die die wärmeableitende Oberfläche vergrößernden Strukturen 3 gebildet werden.

In Fig. 11 ist ein Zuheizer 1 mit zwei mittels einer Spannfeder 8 in ein Gehäuse 7 eingespannter Heizelemente 2 samt die wärmeableitende Oberfläche vergrößernden Strukturen 3 und Kontaktblechen 5 dargestellt. Mittig sind vorliegend zwei Kontaktbleche 5 dargestellt, jedoch kann prinzipiell auch eines der Kontaktbleche entfallen. Auch in diesem Fall wird der gesamte Innenraum des Gehäuses 7 von Luft durchströmt, also wiederum sowohl die Öffnungen 2' des Heizelements 2 als auch die Öffnungen 3', die durch die die wärmeableitende Oberfläche vergrößernden Strukturen 3 gebildet werden. Hierbei ist - wie durch die elektrische Kontaktierung auf der rechten Seite von Fig. 11 angedeutet, eine getrennte Schaltung der beiden Heizelemente 2 möglich, so dass dieser Zuheizer 1 bspw. für zweizonige Klimaanlagen verwendet werden kann.

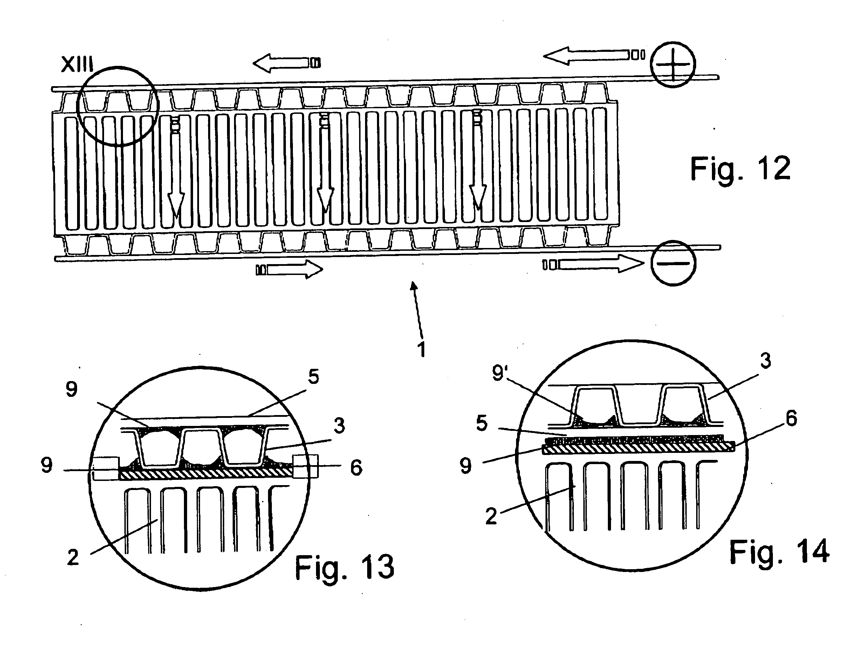

In den Figuren 12 und 13 ist ein geklebter Zuheizer 1 dargestellt, wobei der Aufbau des Zuheizers 1 dem des ersten Ausführungsbeispiels entspricht. Hierbei ist ein - vorliegend elektrisch leitender - Klebstoff 9 zwischen der Beschichtung 6 und der die wärmeableitende Oberfläche vergrößernden Struktur 3 und zwischen der die wärmeableitende Oberfläche vergrößernden Struktur 3 und dem Kontaktblech 5 vorgesehen.

Soll ein isolierender Klebstoff verwendet werden, so können Kontaktpunkte vorgesehen werden, welche beim Fügen in Folge der Anpresskraft automatisch von Klebstoff befreit werden, so dass eine elektrische Kontaktierung gewährleistet ist. Dies ist insbesondere auch bei einer Stromdurchführung und/oder einer Stromzu- und -ableitung über die die wärmeableitende Oberfläche vergrößernden Struktur sinnvoll.

Fig. 14 zeigt die erste Variante des ersten Ausführungsbeispiels in geklebter Ausführungsform, wobei ein elektrisch leitfähiger Klebstoff 9 zwischen dem Kontaktblech 5 und der Beschichtung 6 vorgesehen ist. Ein isolierender, aber ausreichend gut wärmeableitender Klebstoff 9' ist zwischen dem Kontaktblech 5 und der die wärmeableitende Oberfläche vergrößernden Struktur 3 vorgesehen, so dass die Struktur 3 bei ausreichender Klebstofffilmdicke zumindest in der Regel nicht stromführend ist.

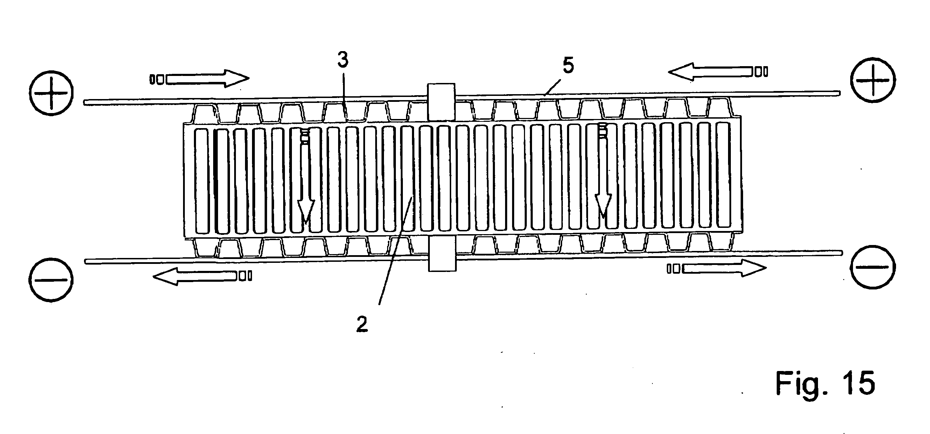

Fig. 15 zeigt einen geklebten Zuheizer 1 mit einem durchgehenden Heizelement 2. Hierbei sind mittig am Heizelement 2 die die wärmeableitende Oberfläche vergrößernden Strukturen 3, wie auch die Kontaktbleche 5 unterbrochen, so dass eine getrennte Schaltung der beiden Heizelementhälften möglich ist.

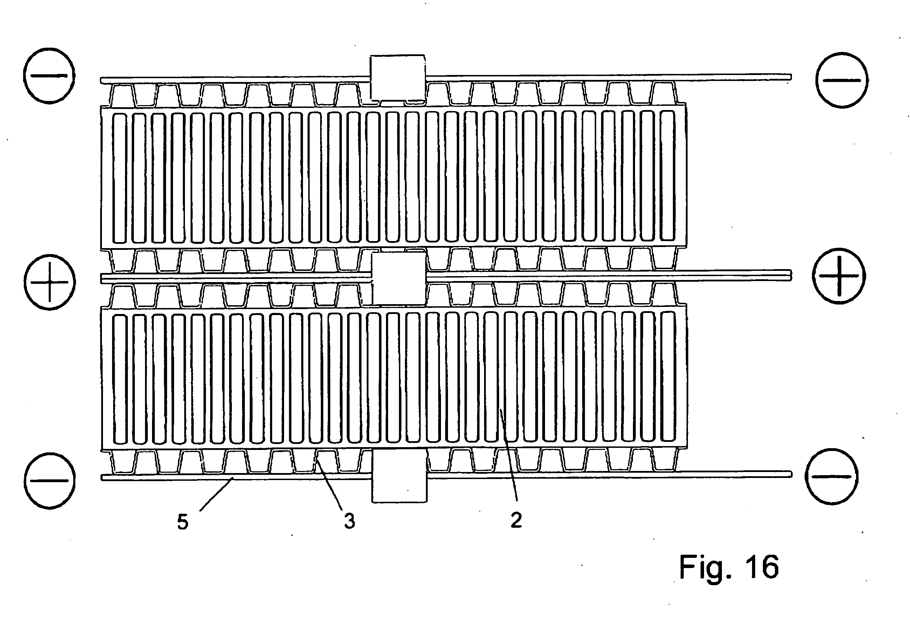

Fig. 16 zeigt einen anderen geklebten Zuheizer 1 mit zwei parallel zueinander angeordneten Heizelementen 2, wobei wiederum mittig an den Heizelementen 2 die die wärmeableitende Oberfläche vergrößernden Strukturen 3, wie auch die Kontaktbleche 5 unterbrochen sind, so dass eine getrennte Schaltung der beiden Heizelementhälften, wie auch der beiden Heizelemente 2 möglich ist. Ein derartiger Zuheizer 1 kann bspw. bei einer vierzonigen Klimaanlage verwendet werden. Die Verschaltung und Ansteuerung kann auf beliebige bekannte Weise erfolgen.

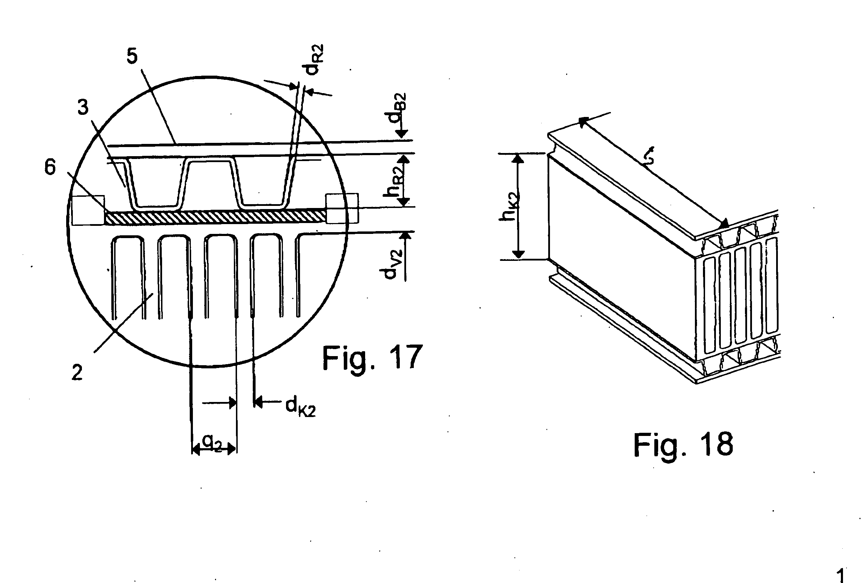

Folgende Leistungswerte und Abmessungen sind für Ausgestaltungen gemäß den zuvor beschriebenen Ausführungsbeispielen besonders geeignet (vgl. Figuren 17 und 18):
Leistungsdichten der Fläche der einzelnen Stege des PTC-Element (bei einer Luftdurchströmung mit einer Luftmenge von mehr als 1 kg/min. und einer Lufteintrittstemperatur von weniger als 40°C): 0,2 bis 0,7 Watt/cm², insbesondere 0,3 bis 0,6 Watt/cm²
Leistungsdichten bezogen auf das Volumen des gesamten PTC-Elements (bei einer Luftdurchströmung mit einer Luftmenge von mehr als 1 kg/min. und einer Lufteintrittstemperatur von weniger als 40°C): 1,5 bis 7,0 Watt/cm³, insbesondere 3,0 bis 5,0 Watt/cm³
Bautiefe t₂: 4 bis 300 mm, insbesondere 15 bis 100 mm
Höhe des PTC-Elements h_{K2}: 4 bis 300 mm, insbesondere 10 bis 100 mm
Dicke (Ober- bzw. Unterseite + ggf. vorhandene Beschichtung) d_{V2}: 0,3 bis 4 mm, insbesondere 0,5 bis 2 mm
Stegdicke d_{K2}: 0,3 bis 3 mm, insbesondere 0,6 bis 1,6 mm
Querteilung q₂: 1,2 bis 8 mm, insbesondere 2 bis 4 mm
Dicke Kontaktblech d_{B2}: 0,4 bis 1,5 mm, insbesondere 0,6 bis 1,0 mm
Dicke des Materials der Struktur d_{R2}: 0,06 bis 0,5 mm, insbesondere 0,1 bis 0,4 mm
bei Entfall des Kontaktbleches 0,3 bis 1,5 mm
Höhe der Struktur h_{R2}: 1 bis 10 mm, insbesondere 2 bis 8 mm

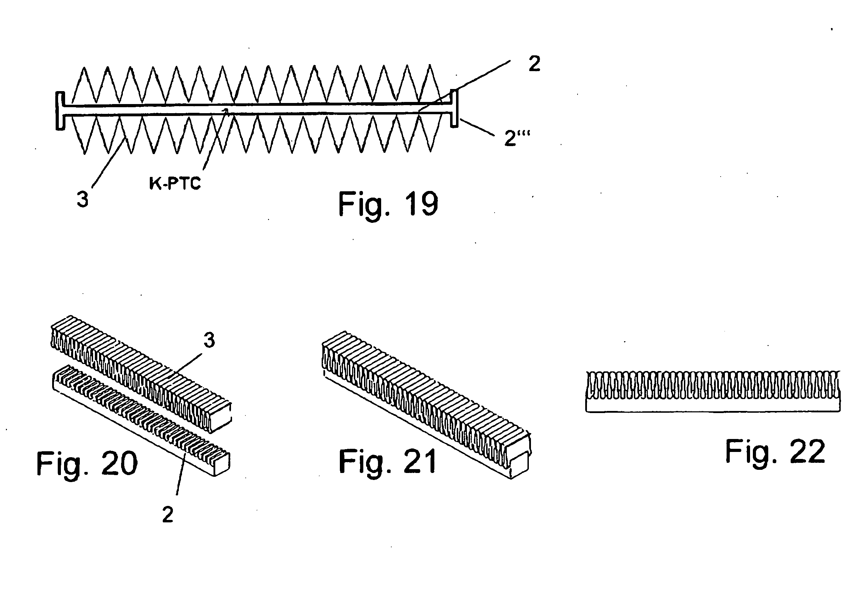

Fig. 19 zeigt eine weitere Anbringungsmöglichkeit der die wärmeableitende Oberfläche vergrößernden Strukturen 3. Hierbei ist das das Heizelement 2 bildende PTC-Element H-förmig ausgebildet und die die wärmeableitende Oberfläche vergrößernden Strukturen 3 sind zwischen den Schenkeln 2"' des PTC-Elements eingespannt, Eine derartige mechanische Fixierung ist als Vorfixierung ausreichend, die eigentliche Fixierung und Anpressung der die wärmeableitende Oberfläche vergrößernden Strukturen 3 an das PTC-Element erfolgt im Rahmen der Montage in das Gehäuse, beispielsweise mittels Spannfedern. In Fig. 19 ist das PTC-Element in seinem mittleren, die beiden Schenkel 2'" verbindenden Bereich flach dargestellt, jedoch kann es vorteilhafterweise in diesem Bereich entsprechend den zuvor beschriebenen Ausführungsbeispielen und deren Varianten ausgestaltet sein.

Eine entsprechende U-förmige Ausgestaltung zur einseitigen Anbringung einer die wärmeableitende Oberfläche vergrößernden Struktur ist natürlich auch möglich.

Ebenso ist ein direktes Umspritzen der Endbereiche der die wärmeableitende Oberfläche vergrößernden Struktur(en) mit dem Kunststoff-PTC-Material möglich.

In beiden Fällen können kurze oder durchgehende Schlitze in Verlängerung des die Schenkel verbindenden Bereichs vorgesehen sind, in welche die in diesem Fall aufgebogenen Enden der die wärmeableitende Oberfläche vergrößernden Strukturen zur besseren Fixierung eingeschoben sind.

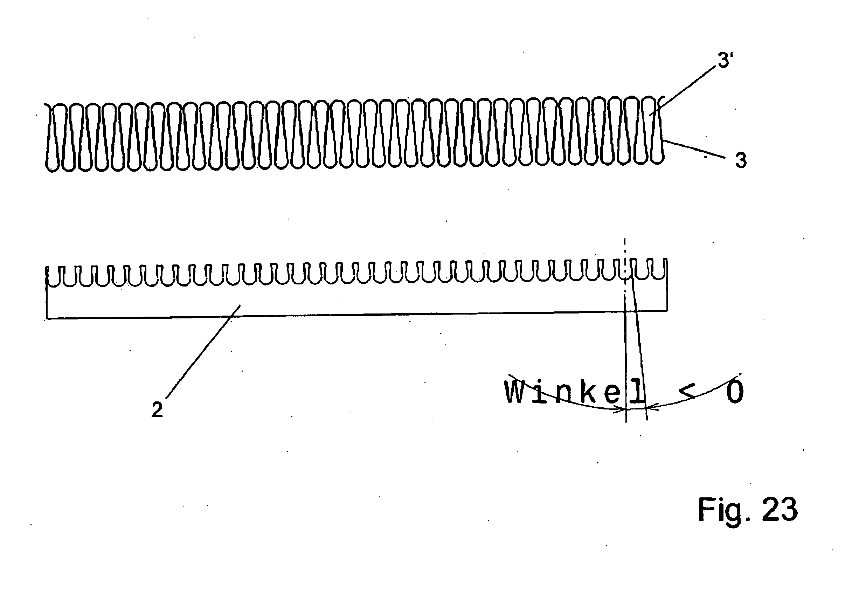

Figuren 20 bis 23 zeigen eine dritte Möglichkeit einer mechanischen (Vor-) Fixierung der die wärmeableitende Oberfläche vergrößernden Strukturen 3 am Heizelement 2. Hierbei ist das wellenförmige Profil der die wärmeableitenden Oberfläche vergrößernden Struktur 3 derart zusammengeschoben, dass die Öffnungen 3' tropfenförmig ausgebildet sind. Das das Heizelement 2 bildenden PTC-Element weist auf seiner Oberseite eine Mehrzahl von Nuten auf, welche in ihrem Profil dem der die wärmeableitende Oberfläche vergrößernden Struktur 3 entsprechen, wobei die Nuten im unteren Bereich weiter sind als im oberen Bereich, so dass eine Hinterschneidung gegeben ist (in Fig. 23 angedeutet durch den Winkel). Die Unterseite der die wärmeableitende Oberfläche vergrößernden Struktur 3 wird - unter leichter elastischer Verformung während des Einführens - in die Nuten eingesetzt und durch die Hinterschneidung hierin gehalten. In Folge der großen Kontaktfläche zwischen der die wärmeableitende Oberfläche vergrößernden Struktur 3 und dem PTC-Element kann über die Struktur 3 großflächig Strom zu- oder abgeleitet werden. Hierbei wird die im PTC-Element erzeugte Wärme schnell über die die wärmeableitende Oberfläche vergrößernde Struktur 3 abgeführt, so dass im Übergangsbereich des PTC-Elements kein Hitzestau erzeugt wird und somit der Übergangsbereich nicht selbsttätig abregelt. Das Heizelement 2 selbst kann vorteilhafterweise entsprechend den zuvor beschriebenen Ausführungsbeispielen und deren Varianten ausgebildet sein.

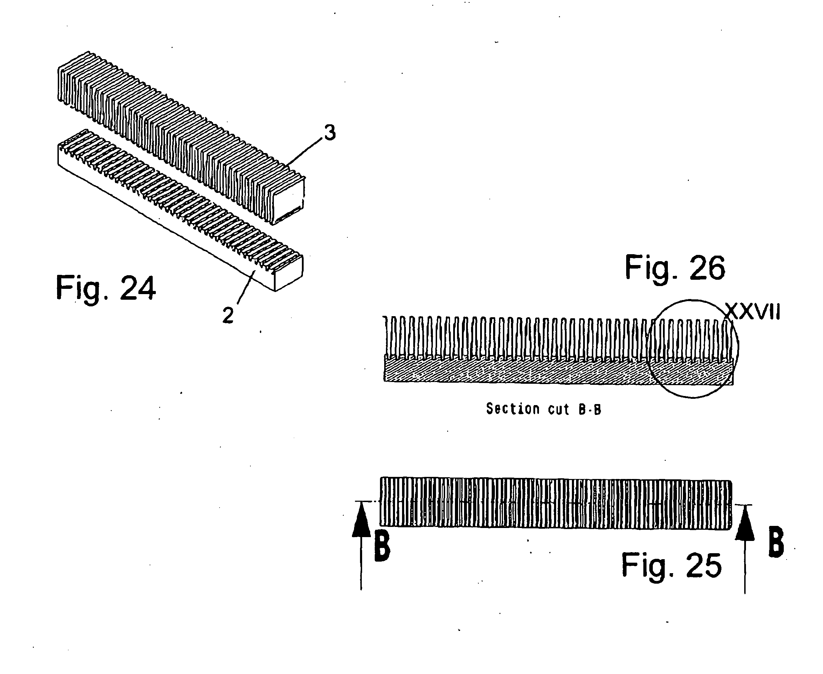

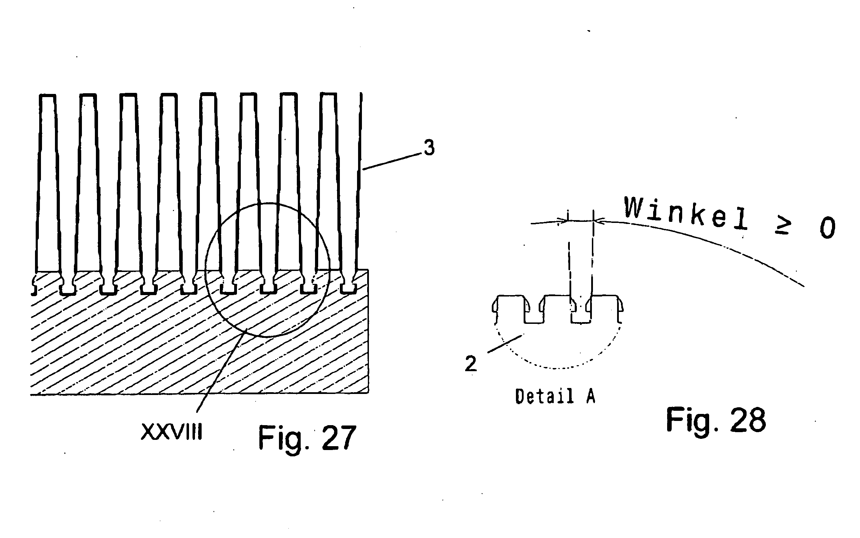

Figuren 24 bis 28 zeigen eine vierte Möglichkeit einer mechanischen Fixierung der die wärmeableitende Oberfläche vergrößernden Strukturen 3 am Heizelement 2. Hierbei ist die Struktur 3 durch eine trapezförmig gebogene Wellrippe gebildet, wobei im unteren Bereich der schräg verlaufenden Bereiche jeweils vorliegend ein sich in Querrichtung erstreckender Schlitz eingestanzt ist. Die Unterseite der Struktur 3 wird wiederum in die mit Nuten versehene Oberseite des das Heizelement 2 bildenden PTC-Elements eingesetzt, wobei die Nuten in ihrer Gestalt der Unterseite der Struktur 3 entsprechen, jedoch sind im Bereich der Schlitze der Struktur 3 durchgehende Nasen ausgebildet (siehe Fig. 27 und 28), so dass entsprechend der vorstehend beschriebenen Möglichkeit der Fixierung eine Hinterschneidung von PTC-Element und Struktur 3 vorgesehen ist, welche sicherstellt, dass die beiden Teile sicher miteinander verbunden sind. Die Schlitze und Nasen müssen sich nicht über annähernd die gesamte Breite erstrecken, vielmehr können - vorzugsweise in Verlängerung voneinander - auch mehrere Schlitze und Nasen vorgesehen sein. An Stelle eines Trapezprofils kann bei dieser Ausgestaltung auch ein Rechteckprofil der Struktur vorgesehen sein.

In sämtlichen Fällen der zuvor beschriebenen mechanischen Befestigung der die wärmeableitende Oberfläche vergrößernden Struktur 3 am Heizelement 2 kann die in mit der Struktur 3 in Kontakt befindliche Fläche mit einer elektrisch leitenden Beschichtung versehen sein, um einen großflächigen Stromübergang sicherzustellen, auch wenn zwischen Struktur 3 und Heizelement 2 in einzelnen Bereichen keine großflächige Anlage in Folge von Abmessungsschwankungen und/oder Fertigungsfehlern vorhanden ist.

Entsprechende positive Effekte auf die Stromein- und Ableitung lassen sich auch bei nicht erfindungsgemäßen flach quaderförmig ausgebildeten PTC-Elementen, insbesondere bei Kunststoff-PTC-Elementen erreichen. Hierbei erfolgt die Stromzu- und -ableitung beispielsweise direkt über die auf der Ober- und Unterseite des PTC-Elements angebrachten, die wärmeableitende Oberfläche vergrößernden Strukturen, jedoch können (zusätzliche) Versteifungs- und/oder Kontaktbleche vorgesehen sein, die auf der Seite der die wärmeableitende Oberfläche vergrößernden Struktur, die dem PTC-Element zugewandt sind, und/oder auf der Außenseite der die wärmeableitende Oberfläche vergrößernden Struktur angebracht sind. Ebenfalls sind elektrisch leitende Beschichtungen eines Teils der Oberfläche des PTC-Elements möglich. Beispielhaft für mögliche Ausgestaltungen entsprechender Heizer oder Zuheizer sei auf die zuvor beschriebenen Ausführungsbeispiele verwiesen, wobei an Stelle des PTC-Elements mit Öffnungen ein flacher bauendes PTC-Element ohne Öffnungen tritt.

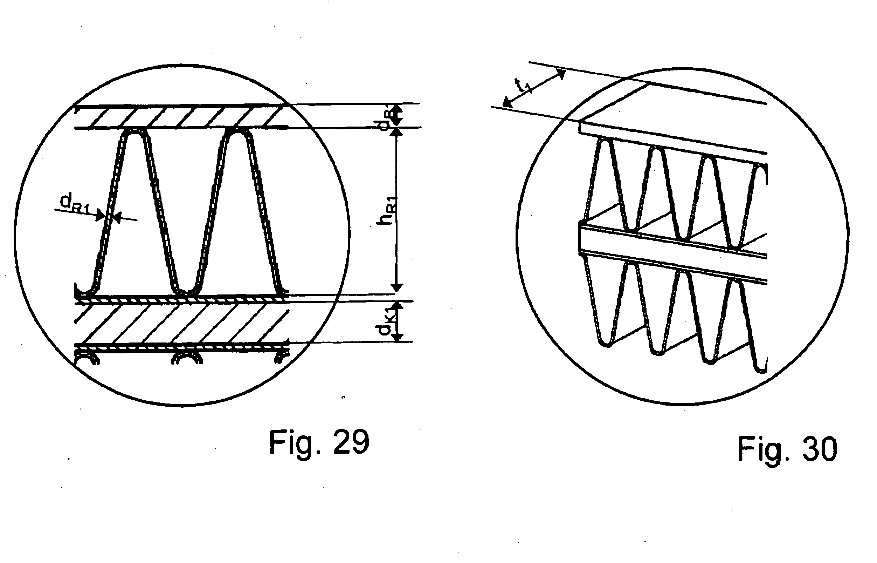

Folgende Abmessungen sind im Unterschied zu den weiter oben stehenden Angaben für Heizer oder Zuheizer mit mit Öffnungen versehenen PTC-Elementen im Falle von nicht erfindungsgemäßen flach quaderförmig ausgebildeten PTC-Elementen ohne Öffnungen besonders vorteilhaft (vgl. Figuren 29 und 30):
Bautiefe t₁: 4 bis 50 mm, insbesondere 8 bis 15 mm
Dicke des PTC-Elements d_{K1}: 0,4 bis 3 mm, insbesondere 0,8 bis 1,8 mm (Hierbei gilt, je dünner das PTC-Element ist, desto besser ist die Wärmeauskopplung, je dicker das PTC-Element ist, desto stabiler ist der Aufbau).
Dicke Kontaktblech d_{B1}: 0,3 bis 1,5 mm, insbesondere 0,6 bis 1,0 mm
Dicke des Materials der Struktur d_{R1}: 0,05 bis 0,2 mm, insbesondere 0,08 bis 0,15 mm
bei Entfall des Kontaktbleches 0,3 bis 1,5 mm
Höhe der Struktur h_{R1}; 4 bis 20 mm, insbesondere 6 bis 12 mm

Die Ausgestaltung und Anbringung der die wärmeableitende Oberfläche vergrößernden Struktur kann entsprechend den zuvor beschriebenen Ausführungsbeispielen erfolgen, so dass auf eine detaillierte Beschreibung einzelner Ausführungsbeispiele verzichtet und vielmehr auf die vorstehenden Ausführungsbeispiele verwiesen wird, welche entsprechend abzuwandeln sind. Entsprechendes gilt auch für den Gesamtaufbau eines Heizers oder Zuheizers, welcher beispielsweise geklebt, mechanisch gespannt oder gelötet sein kann, wobei diese Aufzählung nicht abschließend ist.

Natürlich können in einem Heizer oder Zuheizer auch einzelne Bauformen, mit und ohne vom Medium durchströmbare Öffnungen in den PTC-Elementen, miteinander kombiniert werden.

Die die wärmeableitende Oberfläche vergrößernden Struktur muss nicht notwendigerweise als Wellrippe ausgebildet sein. Vielmehr kann es sich bei der Struktur auch um eine Weiterleitung von einem PTC-Element zu einem anderen PTC-Element handeln, wobei bevorzugt eine Mehrzahl derartiger Strukturen zwischen den PTC-Elementen vorgesehen sind, um eine gleichmäßigere Stromein- und -ableitung zu ermöglichen. Auch in diesem Fall wird durch die Wärmeableitung aus den kritischen Bereichen die Heizleistung der PTC-Elemente verbessert.

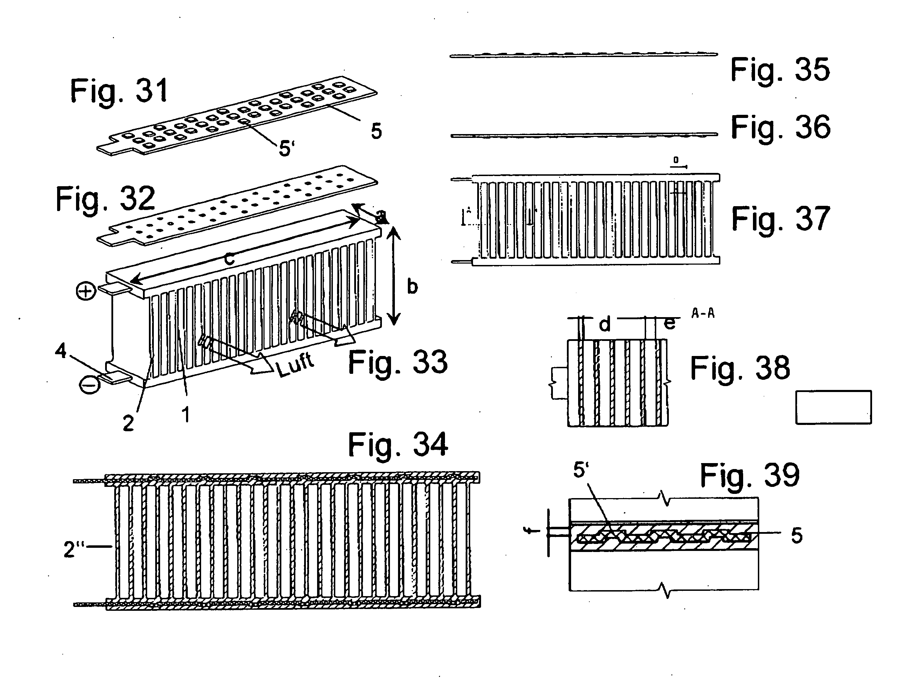

Im Folgenden werden unter Bezugnahme auf die Figuren 31 bis 45 verschiedene nicht erfindungsgemäße Beispiele der Befestigung der Kontaktbleche am bzw. im PTC-Element mittels Eingießens beschrieben.

Gemäß dem in den Figuren 31 bis 39 dargestellten Beispiel eines PTC-Zuheizers 1 sind die beiden Kontaktbleche 5 mit einer Mehrzahl über die gesamte Fläche der Kontaktbleche 5 verteilten Noppen 5' versehen, die vorliegend in eine Richtung weisen und mittels Umformens des Kontaktblechs 5 hergestellt sind.

Die Noppen 5' weisen vorliegend eine etwa pyramidenstumpfartige Form auf, jedoch sind auch andere Formen, bspw. runde, rechteckförmige, wellenartige, trapezförmige oder mäanderartige Ausgestaltungen möglich. Ferner können sich die Erhöhungen auch in unterschiedliche Richtungen erstrecken.

Die Funktion der Noppen 5' verbessert die Haftfähigkeit des PTC-Materials am Kontaktblech 5, so dass auch die elektrische Kontaktierung deutlich verbessert wird.

Das PTC-Material zwischen den Stegen 2" des Heizelements 2 und dem jeweiligen Kontaktblech 5 (Abstand f, siehe Fig. 39) ist möglichst dünn ausgebildet, damit die Wärme nach außen abgegeben werden kann und das PTC-Material im Übergangsbereich nicht in Folge großer Leistungsdichten abregelt.

Wie insbesondere aus Fig. 39 ersichtlich, ist jedes der Kontaktbleche 5 in das PTC-Material eingegossen, d.h. - abgesehen von den seitlich herausstehenden Kontaktfahnen 4 - vollständig vom PTC-Material umgeben.

Zur Vergrößerung der wärmeableitenden Oberflächen in den Bereichen, in welchen sich der vom Strom durchströmte Querschnitt des PTC-Elements verringert, können innen und/oder oder außen zusätzliche Strukturen zur Vergrößerung der wärmeableitenden Oberfläche angeordnet sein (nicht dargestellt). Auch diese Strukturen können teilweise in das PTC-Material eingegossen sein.

Die Dicke d der Stege 2" des Heizelements 2 ist bevorzugt kleiner als 2 mm, insbesondere bevorzugt 0,5 bis 1,2 mm. Der zuvor genannte Abstand f sollte nicht größer als die Dicke d sein. Der Abstand benachbarter Stege 2" e beträgt vorzugsweise 1 bis 4 mm. In der Regel liegt die maximale Leistungsdichte unter 1 Watt/cm² der PTC-Oberfläche, so dass die abzuführenden Leistungsdichten bei geeigneter Auslegung 0,3 bis max. 0,7 Watt/cm² betragen. Die Abstimmung der Abmessungen a, b und c (siehe Fig. 33) erfolgt entsprechend, wobei a und c linear in die Leistung eingehen. Wird b vergrößert, so nimmt zwar die wärmeübertragende Oberfläche in Folge der größeren Steglänge zu, jedoch sinkt auch die Leistungsdichte in Folge des vergrößerten elektrischen Widerstandes.

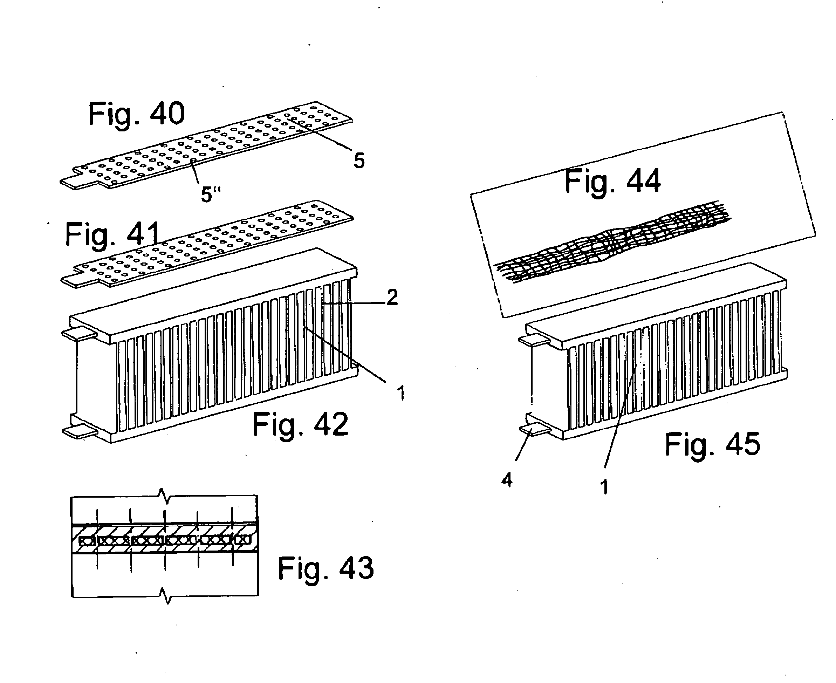

In den Figuren 40 bis 43 ist gemäß eines anderen nicht erfindungsgemäßer Beispiels eines PTC-Zuheizers 1 das Kontaktblech 5 als Lochblech ausgebildet, d.h. es ist eine Mehrzahl von Durchbrüchen 5", vorliegend durchgehender Bohrungen, vorgesehen, welche beim Eingießen des Kontaktblechs in das das Heizelement 2 bildende PTC-Material vollständig gefüllt werden (siehe Fig. 43).

Natürlich müssen die Durchbrüche 5" keine kreisförmige Gestalt haben, vielmehr sind beliebige Formen möglich, wie bspw. schlangenlinienförmige oder rechteckförmige Durchbrüche, dreieckförmige oder viereckige Durchbrüche. Ebenfalls sind Varianten möglich, gemäß denen ein Teil des durchtrennten Materials oder das gesamte Material in eine oder beide Richtungen, bspw. in Form von Graten übersteht, wobei die Grate so klein gehalten sind, dass sie nicht über das PTC-Material überstehen.

Der Zuheizer 1 gemäß diesem Beispiel weist die selbe äußere Form wie der Zuheizer des zuvor beschriebenen Beispiels auf.

Auch der im Folgenden unter Bezugnahme auf die Figuren 44 und 45 beschriebene Zuheizer 1 weist diese Form auf, jedoch sind an Stelle von steifen Kontaktblechen netzartige Kontaktelemente mit endseitigen angebrachten Kontaktfahren 4 vorgesehen, welche den herkömmlichen Kontaktfahnen 4 der zuvor beschriebenen Ausführungsbeispiele entsprechen. Das netzartige Kontaktelement ist wiederum vollständig vom PTC-Material umgeben. Das Netz besteht vorliegend aus Kupferdrähten, jedoch ist auch ein beliebiges anderes geeignetes Material möglich, insbesondere Aluminium.

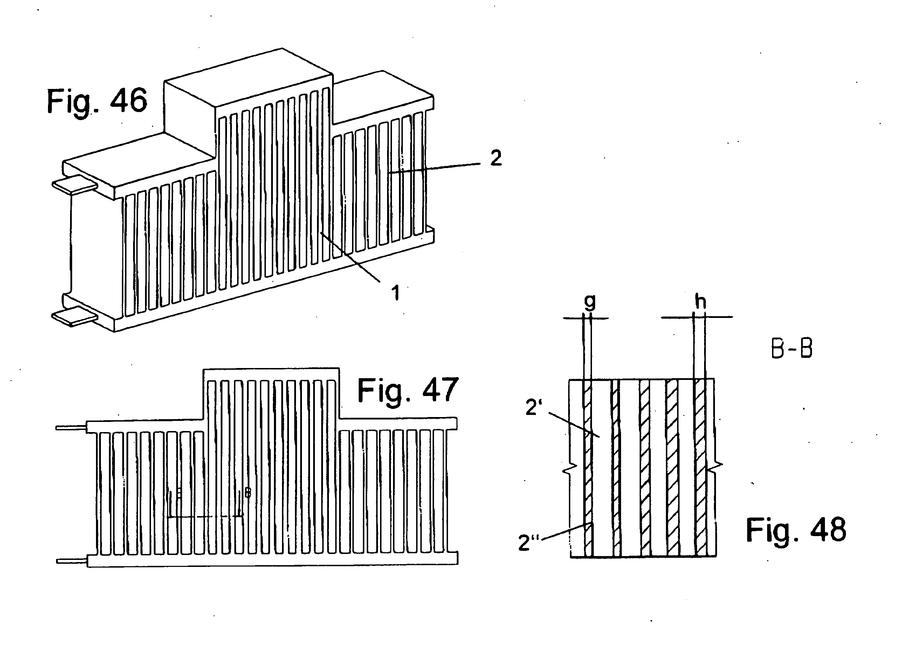

In den Figuren 46 bis 48 ist ein Beispiel eines Zuheizers 1 dargestellt, welcher unterschiedlich hohe Bereiche des Heizelements 2 aufweist. Hierbei sind im in Fig. 47 rechts und links dargestellten Bereich die Stege 2" und somit auch die Öffnungen 2' etwas kürzer ausgebildet als im mittleren Bereich. Um eine gleichmäßige Stromverteilung auf alle Stege 2" zu ermöglichen, sind die Stege 2" im mittleren Bereich etwas breiter (Breite h im Gegensatz zur Breite g der niedrigeren, äußeren Bereiche) ausgebildet, so dass sie - über ihre Gesamtlänge gesehen - den gleichen elektrischen Widerstand aufweisen, wie die kürzeren Stege 2" der seitlichen Bereiche.

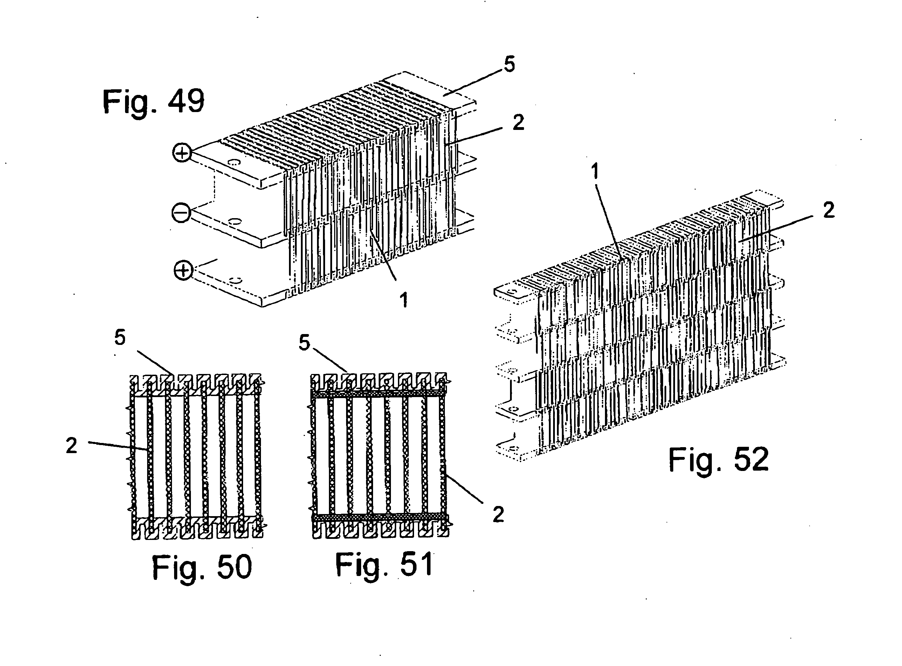

In den Figuren 49 bis 52 sind ein nicht erfindungsgemäßes Beispiel und verschiedene Varianten dargestellt, gemäß denen die PTC-Heizelemente 2 stegförmig ausgebildet sind, wobei eine Mehrzahl parallel zueinander angeordneter PTC-Heizelemente nebeneinander in äquidistanten Abständen angeordnet sind. Die Enden der PTC-Heizelemente sind mit Hilfe von Kontaktelementen 5 elektrisch kontaktiert, wobei die Kontaktelemente 5 Nuten aufweist, in welche die Enden der PTC-Heizelemente ragen. Die Enden der PTC-Heizelemente können in diesen Nuten mechanisch fixiert, eingeklebt oder eingespritzt sein. Ggf. können die PTC-Heizelemente auch die Kontaktelemente 5 zumindest bereichsweise umgeben, d.h. die Kontaktelemente 5 sind eingespritzt.

Die PTC-Heizelemente sind bevorzugt miteinander verbunden (siehe Fig. 51), wobei dies auch durch ein nachträgliches Umspritzen möglich ist.

Dabei kann auch eine Mehrzahl von Reihen mit PTC-Heizelementen 2 übereinander angeordnet sein (siehe Fig. 52).

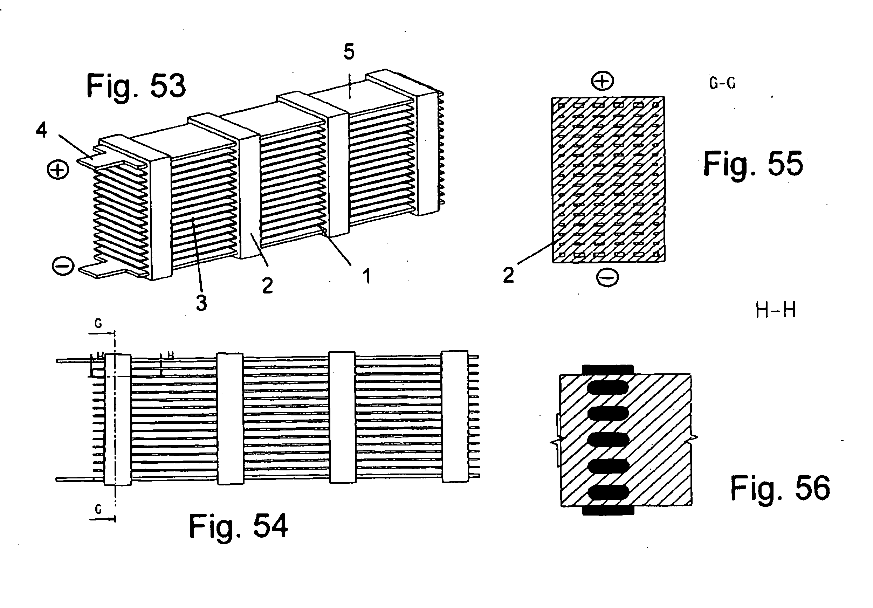

Gemäß dem in den Figuren 53 bis 56 dargestellten nicht erfindungsgemäßer Beispiel eines Zuheizers 1 ist zwischen einzelnen, blockartig ausgebildeten PTC-Heizelementen 2 eine die wärmeableitende Oberfläche vergrößernden Strukturen 3 vorgesehen, welche durch eine Mehrzahl parallel angeordneter dünner Metallbleche gebildet ist. Die Metallbleche bestehen vorliegend aus Aluminium, bevorzugt mit einer Dicke von 0,06 bis 0,4 mm, jedoch sind auch andere gut Metalle oder ggf. auch andere wärmeleitende Materialien geeignet. Die Abstände zweier benachbarter Strukturen 3 beträgt bevorzugt 1 bis 5 mm. Die Strukturen 3 sind im Bereich der PTC-Heizelemente 2 gelocht ausgebildet, wobei die Lochung vorliegend durch ovale Durchbrüche gebildet ist. Dabei sind die Durchbrüche, vor allem die schmalen Breiten des Lochs, nicht zu groß ausgebildet, damit eine gute Wärmeableitung durch die einzelnen Strukturen 3 möglich ist. Die Lochbreite (an der schmalen Seite) beträgt bevorzugt unter 3 mm, insbesondere zwischen 1 und 1,5 mm.

Der Stromfluss erfolgt, ein- bzw. ausgeleitet über die entsprechende Kontaktfahne 4 und verteilt durch ein oben und ein unten angeordnetes Kontaktblech 5 durch die gesamten PTC-Elemente in einer Richtung. Der Abstand der einzelnen PTC-Heizelemente 2 beträgt vorzugsweise 10 bis 40 mm.

Die außen angeordneten Kontaktbleche 5 können auch mit den Strukturen 3 in die Heizelemente 2 eingegossen werden. Hierbei ist die Blechdicke der Kontaktbleche bevorzugt größer als die der Strukturen 3, bevorzugt beträgt die Dicke der Kontaktbleche 0,4 bis 0,8 mm.

## Patentansprüche

1. Elektrischer Heizer oder Zuheizer, insbesondere für eine Heizungs- oder Klimaanlage eines Kraftfahrzeugs, mit mindestens einem Heizelement (2), das aus einem PTC-Element gebildet ist, welches der Erwärmung eines strömenden Mediums dient, und das Heizelement blockartig ausgebildet ist und mit einer Mehrzahl von durchgehenden, parallel zueinander angeordneten Öffnungen versehen ist,
wobei der elektrische Heizer oder Zuheizer (1) mindestens eine im Medienstrom angeordnete, die wärmeableitende Oberfläche vergrößernde Struktur (3) aufweist, die parallel zum Heizelement und zur Luftströmungsrichtung dem Heizelement benachbart angeordnet ist,
die die wärmeableitende Oberfläche vergrößernde Struktur (3) durchgehende, von einem Medium durchströmbare Öffnungen (3') und/oder Kanäle und/oder umströmbare Rippen aufweist oder bildet, und
die die wärmeableitende Oberfläche vergrößernde Struktur (3) mit einem Teil ihrer Oberfläche direkt anliegend an das Heizelement (2) zumindest in einem Bereich angeordnet ist, in welchem die Stromein - oder -ableitung in das bzw. aus dem PTC-Element erfolgt,
wobei die Öffnungen des Heizelements (2) vom selben Medium wie die wärmeleitende Oberflächenvergrößernde Struktur (3) durchströmbar sind.

2. Elektrischer Heizer oder Zuheizer nach Anspruch 1, **dadurch gekennzeichnet, dass** das Heizelement (2) eine Mehrzahl nebeneinander angeordneter, rechteckförmiger Öffnungen (2') aufweist.

3. Elektrischer Heizer oder Zuheizer nach einem der vorhergehenden Ansprüche, **dadurch gekennzeichnet, dass** die wärmeableitende Oberfläche vergrößernde Struktur (3) zusätzlich der elektrischen Kontaktierung dient.

4. Elektrischer Heizer oder Zuheizer nach einem der vorhergehenden Ansprüche, **dadurch gekennzeichnet, dass** die die wärmeableitende Oberfläche vergrößernde Struktur (3) durch mindestens eine Wellrippe gebildet ist.

5. Elektrischer Heizer oder Zuheizer nach Anspruch 4, **dadurch gekennzeichnet, dass** die die wärmeableitende Oberfläche vergrößernde Struktur (3) zick-zack-förmig und/oder wellenförmig und/oder mäanderförmig ausgebildet ist.

6. Elektrischer Heizer oder Zuheizer nach einem der vorhergehenden Ansprüche, **dadurch gekennzeichnet, dass** das PTC-Element mit einer, insbesondere mit mindestens zwei räumlich durch das PTC-Element voneinander getrennten elektrisch leitenden Beschichtungen (6) versehen ist.

7. Elektrischer Heizer oder Zuheizer nach Anspruch 6, **dadurch gekennzeichnet, dass** die elektrisch leitende Beschichtung (6) durch eine metallische Beschichtung (6), insbesondere durch eine Silber-, Aluminium-Kupfer- oder Goldschicht, oder durch eine aufgebrachte Metallfolie, insbesondere aus Aluminium, einer Aluminium-Legierung, Kupfer oder einer Kupfer-Legierung, gebildet ist.

8. Elektrischer Heizer oder Zuheizer nach einem der vorhergehenden Ansprüche, **dadurch gekennzeichnet, dass** das Heizelement (2) aus einem Polymer, insbesondere einem Polyolefin, mit elektrisch leitenden Füllmaterialien, insbesondere mit Kohlenstoff, insbesondere in Form von Rußpartikeln, besteht.

9. Elektrischer Heizer oder Zuheizer nach einem der vorhergehenden Ansprüche, **dadurch gekennzeichnet, dass** die die wärmeableitende Oberfläche vergrößernde Struktur (3) durch ein oder mehrere Metallbleche, insbesondere aus Aluminium, Kupfer oder Silber, gebildet ist.

10. Elektrischer Heizer oder Zuheizer nach einem der vorhergehenden Ansprüche, **dadurch gekennzeichnet, dass** die die wärmeableitende Oberfläche vergrößernde Struktur (3) mit dem Heizelement (2) und/oder einem Kontaktblech (5) verklebt und/oder verlötet und/oder mechanisch verspannt ist.

11. Kraftfahrzeug-Heiz- oder -Klimaanlage **gekennzeichnet durch** mindestens einen elektrischen Heizer oder Zuheizer (1) gemäß einem der vorstehenden Ansprüche.

## Claims

1. Electric heater or auxiliary heater, in particular for a heater or air conditioning system of a motor vehicle, having at least one heating element (2) being formed from a PTC element, which serves for the heating of a flowing medium, and wherein the heating element is embodied in the manner of blocks, and is equipped with a plurality of continuous openings being disposed parallel to each other,
wherein the electric heater or auxiliary heater (1) has at least one structure (3) enlarging the heat discharging surface that disposed in the media flow, which is disposed parallel to the heating element and adjacent to the air flow direction,
the structure (3) enlarging the heat discharging surface has or forms continuous openings (3') which may be flowed through by a medium, and/or channels, and/or ribs to be flowed around, and
the structure (3) enlarging the heat discharging surface is disposed with part of the surface thereof directly abutting the heating element (2) in at least one area, in which the flow introduction or discharge is carried out into or out of the PTC element,
wherein the openings of the heating element (2) may be flowed through by the same medium as the structure (3) enlarging the heat discharging surface.

2. Electric heater or auxiliary heater according to claim 1, **characterized in that** the heating element (2) has a plurality of rectangular openings (2') being disposed next to each other.

3. Electric heater or auxiliary heater according to one of the previous claims, **characterized in that** the surface (3) enlarging the heat discharging surface additionally serves for electric contacting.

4. Electric heater or auxiliary heater according to one of the previous claims, **characterized in that** the structure (3) enlarging the heat discharging surface is formed by at least one undulated rib.

5. Electric heater or auxiliary heater according to claim 4, **characterized in that** the structure (3) enlarging the heat discharging surface is embodied in a zigzag and/or an undulated and/or a meandering manner.

6. Electric heater or auxiliary heater according to one of the previous claims, **characterized in that** the PTC element is equipped with one, in particular with at least two electrically conductive coatings (6) being spatially separated by the PTC element.

7. Electric heater or auxiliary heater according to claim 6, **characterized in that** the electrically conductive coating (6) is formed by a metallic coating (6), in particular by a silver, aluminum, copper, or gold layer, or by means of an applied metal film, in particular made from aluminum, an aluminum alloy, copper, or a copper alloy.

8. Electric heater or auxiliary heater according to one of the previous claims, **characterized in that** the heating element (2) consists of a polymer, in particular a polyolefin, with electrically conductive fillers, in particular carbon, in particular in the form of sooty particles.

9. Electric heater or auxiliary heater according to one of the previous claims, **characterized in that** the structure (3) enlarging the heat discharging surface is formed by means of one or more sheet metals, in particular made from aluminum, copper, or silver.

10. Electric heater or auxiliary heater according to one of the previous claim, **characterized in that** the structure (3) enlarging the heat discharging surface is glued and/or soldered and/or mechanically biased to the heating element (2) and/or a contact latch (5).

11. Motor vesicle heater or air conditioning system, **characterized by** at least one electric heater or auxiliary heater (1) according to one of the previous claims.

## Revendications

1. Dispositif de chauffage électrique ou dispositif de chauffage auxiliaire électrique, en particulier pour un système de chauffage ou de climatisation d'un véhicule automobile, comprenant au moins un élément chauffant (2) qui est formé par un élément à coefficient de température positif (CTP), élément qui sert au chauffage d'un milieu en circulation, et l'élément chauffant est configuré sous forme de bloc et est doté d'une pluralité d'ouvertures continues, disposées en étant parallèles les unes aux autres,
où le dispositif de chauffage électrique ou dispositif de chauffage auxiliaire électrique (1) présente au moins une structure (3) disposée dans le flux du milieu en circulation et augmentant la surface dissipant de la chaleur, laquelle structure, parallèle à l'élément chauffant et à la direction d'écoulement de l'air, est disposée en étant voisine de l'élément chauffant,
la structure (3) augmentant la surface dissipant de la chaleur présente ou forme des ouvertures (3') continues pouvant être traversées par un milieu en circulation et / ou des conduits et / ou des ailettes pouvant être baignées par un milieu en circulation, et
la structure (3) augmentant la surface dissipant de la chaleur est disposée, au moins dans une zone, en ayant une partie de sa surface directement contiguë à l'élément chauffant (2), zone dans laquelle se produit l'introduction ou l'évacuation de flux, ledit flux entrant dans l'élément CTP ou sortant de celui-ci,
où les ouvertures de l'élément chauffant (2) peuvent être traversées par le même milieu en circulation que celui traversant la structure (3) augmentant la surface dissipant de la chaleur.

2. Dispositif de chauffage électrique ou dispositif de chauffage auxiliaire électrique selon la revendication 1, **caractérisé en ce que** l'élément chauffant (2) présente une pluralité d'ouvertures (2'), de forme rectangulaire, disposées les unes à côté des autres.

3. Dispositif de chauffage électrique ou dispositif de chauffage auxiliaire électrique selon l'une ou l'autre des revendications précédentes, **caractérisé en ce que** la structure (3) augmentant la surface dissipant de la chaleur sert en outre à la mise en contact électrique.

4. Dispositif de chauffage électrique ou dispositif de chauffage auxiliaire électrique selon l'une quelconque des revendications précédentes, **caractérisé en ce que** la structure (3) augmentant la surface dissipant de la chaleur est formée par au moins une ailette ondulée.

5. Dispositif de chauffage électrique ou dispositif de chauffage auxiliaire électrique selon la revendication 4, **caractérisé en ce que** la structure (3) augmentant la surface dissipant de la chaleur est configurée en / ayant la forme de zigzags et / ou d'ondulations et / ou de méandres.

6. Dispositif de chauffage électrique ou dispositif de chauffage auxiliaire électrique selon l'une quelconque des revendications précédentes, **caractérisé en ce que** l'élément CTP est doté d'un, en particulier d'au moins deux revêtements (6) électriquement conducteurs, physiquement séparés l'un de l'autre par l'élément CTP.

7. Dispositif de chauffage électrique ou dispositif de chauffage auxiliaire électrique selon la revendication 6, **caractérisé en ce que** le revêtement (6) électriquement conducteur est formé par un revêtement métallique (6), en particulier par une couche d'argent, d'aluminium, de cuivre ou d'or, ou bien par une feuille de métal appliquée, en particulier en aluminium, en alliage d'aluminium, en cuivre ou en alliage de cuivre.

8. Dispositif de chauffage électrique ou dispositif de chauffage auxiliaire électrique selon l'une quelconque des revendications précédentes, **caractérisé en ce que** l'élément chauffant (2) se compose d'un polymère, en particulier d'une polyoléfine, de charges électriquement conductrices, en particulier de carbone, en particulier sous forme de particules de noir de carbone.

9. Dispositif de chauffage électrique ou dispositif de chauffage auxiliaire électrique selon l'une quelconque des revendications précédentes, **caractérisé en ce que** la structure (3) augmentant la surface dissipant de la chaleur est formée par une ou plusieurs tôles de métal, en particulier en aluminium, en cuivre ou en argent.

10. Dispositif de chauffage électrique ou dispositif de chauffage auxiliaire électrique selon l'une quelconque des revendications précédentes, **caractérisé en ce que** la structure (3) augmentant la surface dissipant de la chaleur est collée avec l'élément chauffant (2) et / ou avec une tôle de contact (5) et / ou brasée et / ou tendue mécaniquement.

11. Système de chauffage ou de climatisation d'un véhicule automobile, **caractérisé par** au moins un dispositif de chauffage électrique ou dispositif de chauffage auxiliaire électrique (1) selon l'une quelconque des revendications précédentes.
